# EUROPEAN PATENT SPECIFICATION

(11) **EP 1 422 508 B1**
(45) Date of publication and mention of the grant of the patent: **15.06.2011**
(21) Application number: 02751714.3
(22) Date of filing: 26.07.2002
(51) Int. Cl.: G01M 17/02, B60C 19/00, G06F 17/50, G01M 17/007, G01M 17/06

(54) **TIRE TESTING MACHINE FOR REAL TIME EVALUATION OF STEERING STABILITY**
REIFENPRÜFMASCHINE FÜR DIE ECHTZEITBEWERTUNG DER LENKSTABILITÄT
MACHINE DE TEST DE PNEUS POUR EVALUATION EN TEMPS REEL DE LA STABILITE DE DIRECTION

(30) Priority: 26.07.2001 JP 2001225720
(43) Date of publication of application: 26.05.2004
(73) Proprietor: Bridgestone Corporation, Tokyo 104-8340 (JP); Nagai, Masao, Tokyo 184-8588 (JP)
(72) Inventor: NAGAI, Masao, c/o TOKYO UNIV. OF AGRICULTURE & TEC, Koganei-shi, Tokyo 184-8588 (JP); YOSHIDA, Hidehisa, TOKYO UNIV OF AGRICULTURE & TEC, Koganei-shi, Tokyo 184-8588 (JP); KAWAMATA, Satoshi, c/o BRIDGESTONE CORPORATION, Kodaira-shi, Tokyo 187-0031 (JP); MURAKAMI, Kazutomo, c/o BRIDGESTONE CORPORATION, Kodaira-shi, Tokyo 187-0031 (JP)
(74) Representative: Whalley, Kevin
(86) International application number: PCT/JP2002/007590
(87) International publication number: WO 2003/010505

(56) References cited:
- DE-A1- 19 505 533
- JP-A- 2000 289 417
- US-A- 5 942 673
- US-B1- 6 234 011
- US-B1- 6 247 348

## Description

### Technical Field

The present invention relates to a hybrid hardware-software simulation system wherein a driving part including at least a tire of a vehicle constitutes hardware, information obtained by driving the driving part of the hardware is input as a parameter to software which simulates the rest part of the vehicle and then information indicating behavior characteristics of the entire vehicle is derived, so that desired information can be readily, accurately and quickly obtained as compared with a system in which the entire vehicle is simulated by either hardware or software alone.

### Background

An actual vehicle traveling test which collects necessary information by actually driving an actual vehicle having equipped with tires on the vehicle body on a test course, and an actual vehicle frame traveling test which collects necessary information by dummy driving such an actual vehicle on at least two rotating drums are conventionally known for simulating the driving characteristics of the vehicle.

Further, accompanying recent development of the computer technologies, full computer simulation is proposed in which each of tires, suspensions supporting the tires and a vehicle body is modeled, and computing is carried out under various conditions to obtain information about the behavior characteristics of the vehicle.

In the above-mentioned actual vehicle traveling test and actual vehicle frame traveling test, an actual vehicle provided with all of tires, suspensions supporting the tires and a vehicle body has to be prepared, so that there is a drawback in which extremely long time is required before the necessary information is obtained and its cost is considerable. Moreover, for example, when information about the driving characteristics of vehicles in which sets of a particular tire and a particular suspension are commonly combined with various vehicle bodies is required to be collected, there is also a drawback in which enormous labor is demanded for operators since all of the required vehicles has to be prepared and the tire/suspension assemblies have to be attached to/detached from the vehicles.

Further, although temperature characteristics of the tire is a serious problem for an examination of the driving characteristics of the vehicle, it is nearly impossible to set the temperature of the tire to the required temperature during the actual vehicle traveling test and hence the temperature characteristic of the behavior of the vehicle cannot be accurately obtained. As the characteristics of the tire greatly vary depending on the temperature, it becomes more important in these days to know the temperature characteristic of the behavior of the vehicle.

Moreover, the actual vehicle traveling test and the actual vehicle frame traveling test use actual vehicles and therefore may involve risks, so that closest attention has to be paid to avoid the risks, causing a problem that a significant part of the labor of the operators is consumed in this point.

Meanwhile, in a full computer simulation in which each of tires, suspensions and vehicle body is modeled and computing is carried out under various conditions to obtain information about the behavior characteristic of the vehicle, there is a problem that enormous labor and cost are spent to configure the models. The tire, particularly, is a composite body of various materials, so that the modeling thereof is extremely complicated. However, accurate information cannot be obtained if the tire is simulated by a simple model.

An object of the present invention is, therefore, to solve the above-mentioned various drawbacks of the conventional actual vehicle traveling test, actual vehicle frame traveling test and full computer simulation, and to provide a simulation system and an apparatus of the vehicle capable of easily obtaining information about the traveling behavior of the vehicle at a lower cost.

Another object of the present invention is to provide a simulation system and an apparatus of the vehicle capable of accurately and easily deriving the temperature characteristic of the traveling behavior of the vehicle by controlling the temperature of the tire.

US 6,247,348 discloses a hybrid simulation system of a vehicle to be used in a tire testing machine. Similarly, US 5,942,673 and US 6,234,011 also disclose similar hybrid simulation systems of a vehicle to be used in a tire testing machine. DE 195,05,533 discloses a dynamic roadway test stand with which the running characteristics of a motor vehicle wheel on a roadway can be tested.

### Disclosure of the Invention

A hybrid simulation system of a vehicle according to a first aspect of the present invention is provided in claim 1. Optional features are provided by the dependent claims.

### Brief Description of Drawings

FIG. 1 is a diagram showing a basic configuration of the hybrid simulation system of the vehicle according to the present invention;
FIG. 2 is a diagram showing the entire configuration of the first example of the hybrid simulation system of the vehicle according to the present invention;
FIG. 3 is a diagram showing the configuration of the driving device thereof as well;
FIG. 4 is a diagram showing the steering angle;
FIG. 5 is a diagram showing the camber angle;
FIG. 6 is a diagram showing the entire configuration of the second example of the hybrid simulation system of the vehicle according to the present invention;
FIG. 7 is a diagram showing the configuration of the driving device thereof as well;
FIG. 8 is a diagram showing the entire configuration of the third example of the hybrid simulation system of the vehicle according to the present invention;
FIG. 9 is a diagram showing the configuration of the hardware of another example of the hybrid simulation system of the vehicle according to the present invention; and
FIG. 10 is a diagram showing the configuration of the hardware of another example modifying the example shown in FIG. 9.

### Best Mode for Carrying out the Invention

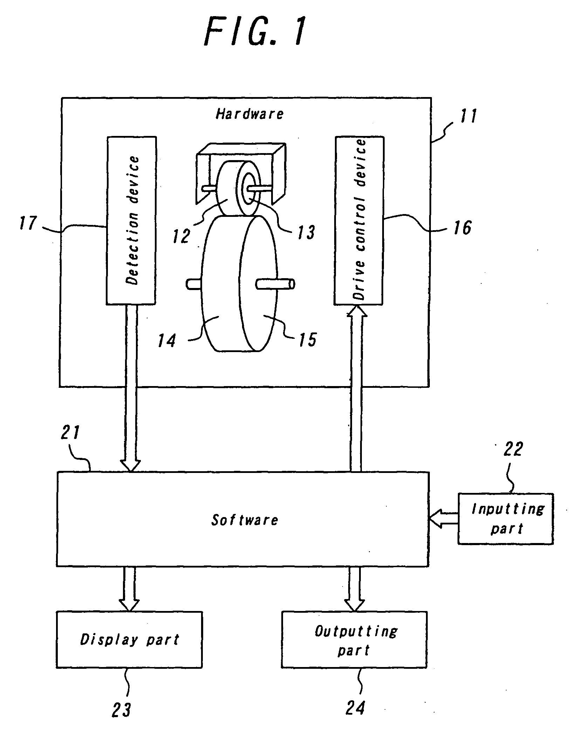

FIG. 1 is a block diagram showing the entire configuration of the hybrid simulation system of the vehicle according to the first embodiment of the present invention. The hybrid simulation system has hardware 11 driving, under the comparable condition to that in an actual driving, a driving part including a tire 12 which is assembled with a wheel 13 and is inflated at a given internal pressure, and software 21 to which information output from the hardware 11 is input to simulate a running condition of the vehicle. The hardware 11 is provided with a rotational drum 15 having a dummy road 14 to which a tire 12 which is assembled with a wheel 13 and is inflated at a given internal pressure is press-contacted, a drive controlling device 16 having plural actuators for controlling the press-contact condition of the tire 12 against the dummy road 14, and a detection device 17 having plural sensors for detecting forces applied from the tire to its supporting device.

When the tire 12 is rotationally driven under the comparable condition to that in an actual drive with the tire 12 and the rotational drum 15 driven by the actuator of the drive control device 16, the information output from the sensors of the detection device 17 is supplied to the software 21. In the software 21, a program modeling at least a vehicle body of the vehicle is provided, and the information output from the detection device 17 of the hardware 11 is input as a parameter and is computed to output information indicating the behavior characteristics of the vehicle. In this regard, at least a part of the drive information output from the software 21 is fed back to the actuator of the drive control device 16 of the hardware 11 to control the drive condition of the driving part of the vehicle depending on the behavior of the vehicle.

Moreover, an inputting part 22 such as a keyboard for inputting necessary conditions, a display part 23 for displaying the information output from the software, and an outputting part 24, such as a printer, for outputting the information are arranged around the software 21 which is generally configured as CPU.

When the behavior characteristics of a two-wheeled vehicle for example, is examined, a rotational drum, a drive controlling device and a detection device are equipped for each of the front tire and the rear tire, although they are respectively drawn as an single unit in FIG. 1 for simplifying the drawing. When the behavior characteristics of a four-wheeled vehicle as the vehicle is examined, a rotational drum, a drive controlling device and a detection device are, of course, equipped for each of the right and left front wheels and the right and left rear wheels. It is, however, possible to share a part of the devices with taking the accuracy required for the measurement of the behavior characteristics into account. Further, an endless belt may be used in stead of the rotational drum 15 having the dummy road 14.

In the hybrid simulation system of the vehicle according to the present invention, a desired tire 12 to be examined is firstly assembled with a wheel 13 and is inflated at a given internal pressure. Then the assembly is installed in the hardware. Conditions such as a vertical load for press-contacting the tire 12 against the dummy road 14, the traveling velocity of the tire 12, the traveling velocity of the rotational drum 15, steering angle defined as an angle between a direction perpendicular to the rotational axis of the tire 12 and a direction in which the dummy road 14 is running, and a camber angle defined as an angle between the rotational axis of the tire 12 and the dummy road 14 are input with using the inputting part 22.

The software 21 generates a drive control signal according to the conditions having been input in this manner, and supplies them to a given actuator of a drive control mechanism16 of the hardware 11 to drive the tire 12 according to a given input condition. The detecting device 17 of the hardware 11 is provided with a sensor for detecting the peripheral velocity of the tire, a sensor for detecting the traveling velocity of the dummy road, and six sensors for detecting forces in mutually orthogonal three axes x, y, and z including the rotational axis of the tire and rotation moments about these three axes. While the tire 11 is driven, the detecting signals output from these sensors are supplied to the software 21. In the software 21, a given computing is carried out in accordance with the previously prepared program as these detecting signals being parameters, and the information indicating the running behavior is output. In so doing, the drive control signals obtained by processing in the software 21 the information output from the hardware 11 are fed back to the drive control device 17 of the hardware 11, thereby enabling accurate examinations of, for example, a steering response of the vehicle in cornering and a straight line response of the vehicle after cornering.

The behavior characteristics of the vehicle determined in this manner can be displayed on the display part 23 consisting of, for example, a monitor, and can be output as a hard copy from the output part 24 consisting of, for example, a printer, as well as storing in the memory device provided in the software 21. The information stored in this manner is later derived and processed to be able to obtain more accurate and reliable information.

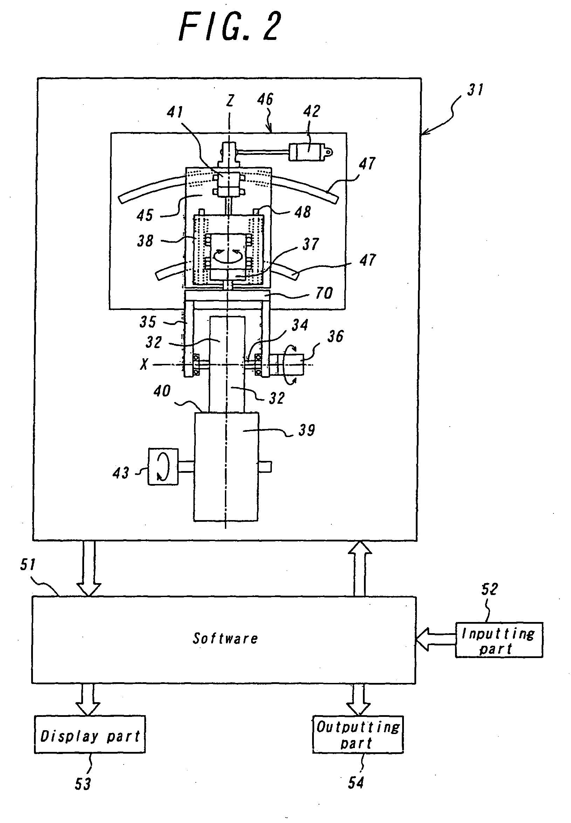

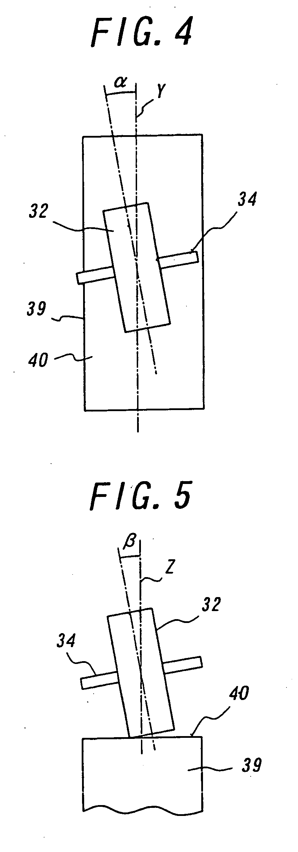

FIG. 2 is a diagram showing the entire configuration of the first example of the hybrid simulation apparatus of the vehicle according to the present invention, FIG. 4 is a diagram showing the steering angle, and FIG. 5 is a diagram showing the camber angle. This example is intended to examine the characteristics of the running behavior of a four-wheeled vehicle, and hence the hardware 31 is equipped with four tires, left and right front tires and left and right rear tires. In the figures, however, only the front tire in the right side and the corresponding parts are shown for the purpose of simplicity. A first holding member 35 is configured to hold a rotational axis 34 mounted on a wheel 33 to which a tire 32 is assembled and a tire-rotating servo actuator 36 is configured to be coupled to the rotational axis, thereby enabling the tire to rotate in a given direction at a given velocity.

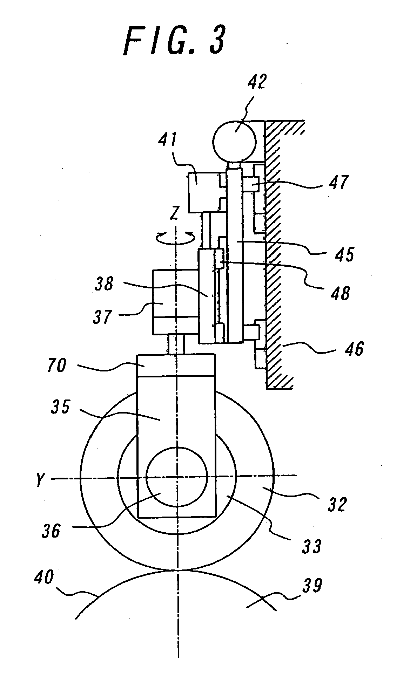

The first holding member 35 is coupled to a second holding member 38 via a six-component force sensor 70 for detecting six component forces acting on the first holding member and a steering angle servo actuator 37 for controlling the steering angle. As used herein, the term "six component forces" is referred to as forces in directions of mutually orthogonal three axes x, y, and z as well as rotation moments about these three exes. The second holding member 38 is coupled to a third holding member 45 via a vertical load servo actuator 41 for translating the second holding member 38 along a translating guide 48 and press-contacting the tire 32 against a dummy road 40 of a rotational drum 39 at a given pressure. Further, the third holding member 45 is coupled to a base 46 via a camber angle servo actuator 42 capable of swinging the third holding member 45 along a circular guide 47 and controlling the camber angle of the tire 32. FIG. 3 shows the above-mentioned driving part in a plane perpendicular to the rotating axis 34 of the tire 32.

In this example, the x-axis is a direction to which the rotational axis 34 coupled to the tire extends, the y-axis is perpendicular to the x-axis and is a direction in which the tire 32 travels, and the z-axis is perpendicular to both of the x and y axes. Therefore, the vertical load servo actuator 41 presses the tire 32 against the dummy road 40 of the rotational drum 39 in the z-axis.
The steering angle servo actuator 37, as shown in FIG. 4, controls the steering angle defined as an angle α between a direction perpendicular to the rotational angle 34 of the tire 32 and the traveling direction of the dummy road 40, i.e. the y-axis direction. The camber angle servo actuator 42 controls the camber angle defined as an angle β between the rotational axis 34 of the tire and the dummy road 40, i.e. the z-axis direction.

As described in the above, the hardware 31 of the present example is provided with the left front tire and the left and right rear tires, and drive control devices similar to the above-mentioned devices can also be provided on these three tires. A drum servo actuator 43 for rotationally driving the rotational drum 39 is provided in addition to the tire rotating servo actuator 36. In this way, by independently driving the tires 32 and the rotational drum 39, more accurate simulation can be achieved with taking slips between the tires 32 and the dummy road 40 during a deceleration or an acceleration in to account.

The hardware 31 is provided with a sensor for detecting the peripheral velocity of the tire 32 and a sensor for detecting the peripheral velocity of the rotational drum 39, i.e. the traveling velocity of the dummy road 40 as well as the six-component force sensor 70. Further, in this example, a sensor for detecting the ambient temperature of the tire 32 may also be provided in order to examine the temperature characteristics of the running behavior of the vehicle and these sensors compose the detecting devices.

As shown in FIG. 2, in addition to the hardware 31 having the above-mentioned configuration, software 51, an input part 52, a display part 53 and an output part 54 are provided. Various detecting signals output from the detecting devices of the hardware 31 are supplied to the software 51. In the software 51, a given computing is performed, according to a program in which the vehicle body is modeled, and based on these detecting signals and various initial and setting conditions input from the input part 52, and information indicating the behavior of the vehicle is output. In this connection, the software 51 generates driving signals for various servo actuators, supplies the signals to the respective servo actuators, and sets the rotational velocity of the tire 32, rotational velocity of the rotational drum 39, vertical load, steering angle, camber angle and the like to be a given value, respectively. Further, the software 51 real-timely varies the drive signals and supplies the drive signals to these servo actuators, and the servo actuators can dynamically vary the outputs such as the ground load of the tire in case of the vertical load servo actuator to examine the transient characteristics of the vehicle in detail. In this way, useful information about behaviors such as the steering response and the straight-running stability of the vehicle can be derived. Moreover, the temperature characteristics of the behavior of the vehicle can be examined by controlling the ambient temperature of the tire 32 in the hardware 31 based on the detecting signal of the temperature sensor.

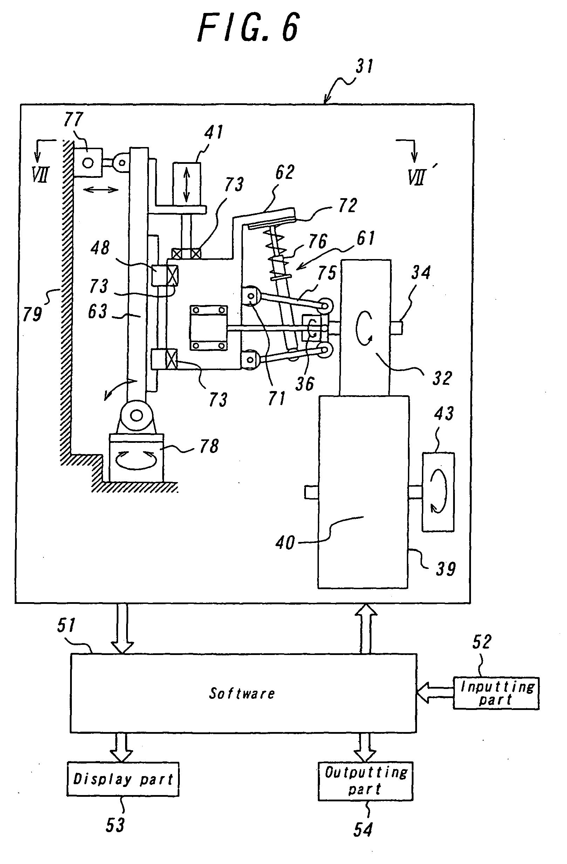

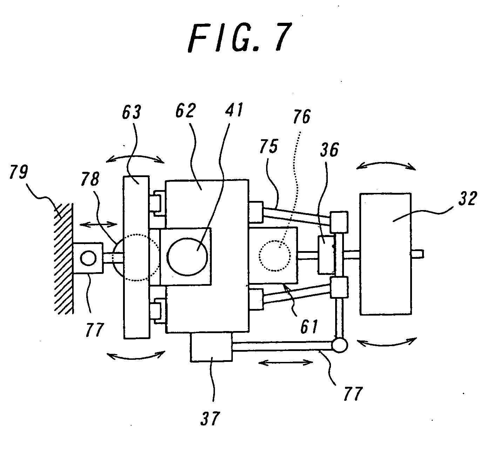

FIG. 6 is a diagram showing the entire configuration of the second example of the hybrid simulation apparatus of the vehicle according to the present invention, and FIG. 7 is a diagram showing from the arrow VII-VII a portion mainly showing the drive mechanism part. Parts same as those in the previous example are denoted by the same reference numerals. In the previous example, the hardware 31 includes the tire 32 assembled with the wheel 33 and hence a program in which the vehicle body and the suspension of the vehicle are modeled is prepared for the software 51. In the present example, however, the hardware 31 includes, in addition to the tire 32 assembled with the wheel 33, a suspension 61 supporting the tire.

As shown in FIG. 6, the rotational axis, 34 of the tire 32 is attached to the tip of the suspension 61 via the tire rotating servo actuator 36 rotationally driving the tire 32. The suspension 61 is coupled to the first holding member 62 via the six-component force sensors 71 and 72 respectively provided on base end parts of a link 75 and a shock absorber 76 constituting the suspension. The first holding member 62 is provided with a steering angle servo actuator 37, and the steering angle of the tire 32 can be controlled via a steering link 77 by operating the steering angle servo actuator 37. The first holding member 62 is coupled to the second holding member 63 via a translation guide 48 for translating the first holding member 62 along the translating guide 48 and press-contacting the tire 32 against the dummy drum 40 of the rotational drum 39 at a given pressure. A six-component force sensor 73 is provided between the translating guide 48 supporting the first holding member 62 and the translating guide 48 and the six-component forces acting on the first holding member can be detected. Moreover, the second holding member 62 is coupled to a base 79 via a vehicle tilting servo actuator 77 and a vehicle swinging servo actuator 78. The vehicle tilting servo actuator 77 and the vehicle swinging servo actuator 78 can swing the base 79, in relation to the second holding member 63, in the tilting direction and the horizontal plane, respectively.

In this example, the tire rotating servo actuator 36 for rotating the tire 32, the drum rotating servo actuator 43 for rotating the rotational drum 39, the vertical load servo actuator 41, and the vehicle tilting servo actuator 77 and the vehicle swinging servo actuator 78 both of which swing the second holding member 63 are driven with the driving signals supplied from the software 51, so that the driving condition of the tire 32 including the suspension 61 can become more close to the actual running condition.

While the tire 32 is driving in this way, the forces and the rotation moments applied via the suspension 61 to the first holding member 62 is detected by the six-component force sensors 71, 72 and 73. The software 51 can process the detecting signals supplied from these sensors to generate the forces and the rotation moments affecting the vehicle body.

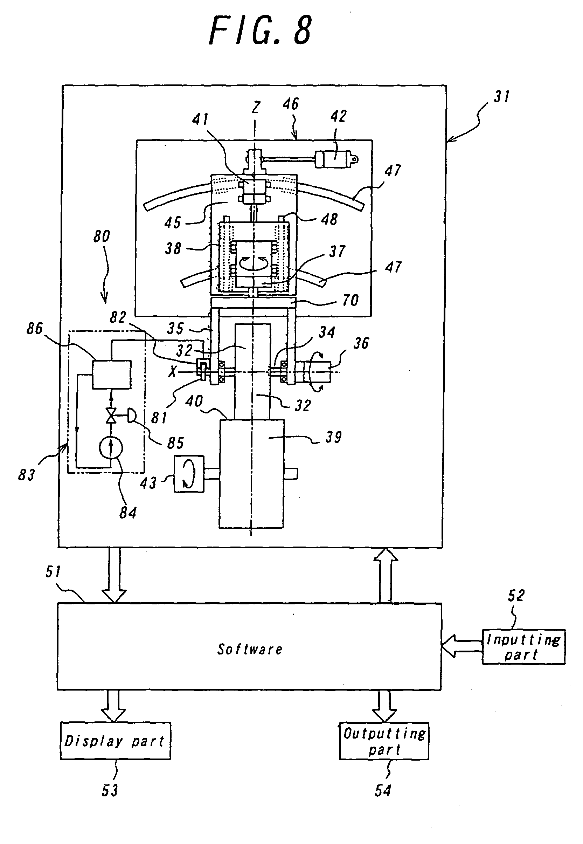

FIG. 8 is a diagram showing the entire configuration of the third example of the hybrid simulation apparatus of the vehicle according to the present invention. Parts same as those in the previous example are denoted by the same reference numerals. This example is also intended to examine the characteristics of the running behavior of the four-wheeled vehicle and hence the hardware 31 is equipped with four tires. In the figures, however, only the front tire in the right side and corresponding parts are shown for the purpose of simplicity. In this example, as is the case with the first example, the first holding member 35 is configured to hold the rotational axis 34 mounted on the wheel 33 to which the tire 32 is assembled and the rotation axis 34 is configured to be coupled to the tire rotating servo actuator 36, thereby enabling the tire 32 to rotate in a given direction at a given velocity. In addition to the configuration of the first example, the hardware 31 of the present example is provided with a brake device 80 for braking the rotation of the tire 32. The brake device 80 is consist of a disk 81 fixed to the rotational axis of the tire, a disk brake 82 sandwiching the brake 81 for braking, and a brake hydraulic device 83 supplying hydraulic pressure to the disk brake 82, and the brake hydraulic device 83 is provided with a hydraulic pump creating the hydraulic pressure, a master hydraulic control valve 85 controlling the primary hydraulic pressure and a hydraulic circuit 86 regulating the hydraulic pressure applied to the disk break.

As is the case with the first example, the hardware 31 of the present invention is provided with a six-component force sensor 70, a steering angle servo actuator 37, a second holding member 38, a translating guide 48, a vertical load servo actuator 41, a third holding member 45, a circular guide 47, a camber angle servo actuator 42 and a base 46. These configurations and functions are also similar to those described in the first example, so the detailed descriptions for these components are omitted.

The hardware 31 is provided with a sensor for detecting the rotational velocity of the tire 32 and a sensor for detecting the rotational velocity of the rotational drum 39, and a sensor for detecting the ambient temperature of the tire 32, as well as the six-component force sensor 70. These sensors constitute a detecting device 17, as is the case with the first example again.

As shown in FIG. 8, as well as the hardware 31 having the above-mentioned configuration, software 51, an input part 52, a display part 53 and an output part 54 are provided. Various detecting signal output from the detecting device of the hardware 31 are supplied to the software 51. In the software 51, a given computing is performed, according to a program in which the vehicle body is modeled, and based on these detecting signals and various initial and setting conditions input from the input part 52 and information indicating the behavior of the vehicle is output. In this connection, the software 51 generates driving signals for various servo actuators of the hardware 31 and the master hydraulic control valve 85 of the brake device 80, supplies the signals to the respective servo actuators and the master hydraulic control valve 85, and sets the rotational velocity of the tire 32, rotational velocity of the rotational drum 39, vertical load, steering angle, camber angle, master hydraulic pressure of the brake device 80 and the like to be a given value, respectively.

Further, as is the case with the first example, the software 51 real-timely varies the drive signals and supplies the drive signals to these servo actuators, and the servo actuators can dynamically vary the outputs such as the ground load of the tire in case of the vertical load servo actuator to examine the transient characteristics of the vehicle in detail. In this way, useful information about behaviors such as the steering response and the straight-running stability of the vehicle can be derived. Moreover, the temperature characteristics of the behavior of the vehicle can be examined by controlling the ambient temperature of the tire 32 in the hardware 31 based on the detecting signal of the temperature sensor.

As described in the above, the hardware 31 of the present example is provided with the left front tire and the left and right rear tires, and drive control devices similar to the above-mentioned devices can also be provided on these three tires. A drum servo actuator 43 for rotationally driving the rotational drum 39 is provided in addition to the tire rotating servo actuator 36. In this way, by independently driving the tires 32 and the rotational drum 39, more accurate simulation can be achieved with taking slips between the tires 32 and the dummy road 40 during a deceleration or an acceleration into account, as is also the case with the first example.

In the third example of the hybrid simulation apparatus, the hardware 11 includes the brake device80 whose braking characteristics is difficult to be simulated by the software, so that the braking characteristics of the vehicle can be more accurately simulated. Moreover, as the brake device 80 has a complicated temperature characteristics, the behavior of the vehicle during the deceleration including a temperature dependency can be more accurately simulated with the brake device 80 being included in the hardware 11.

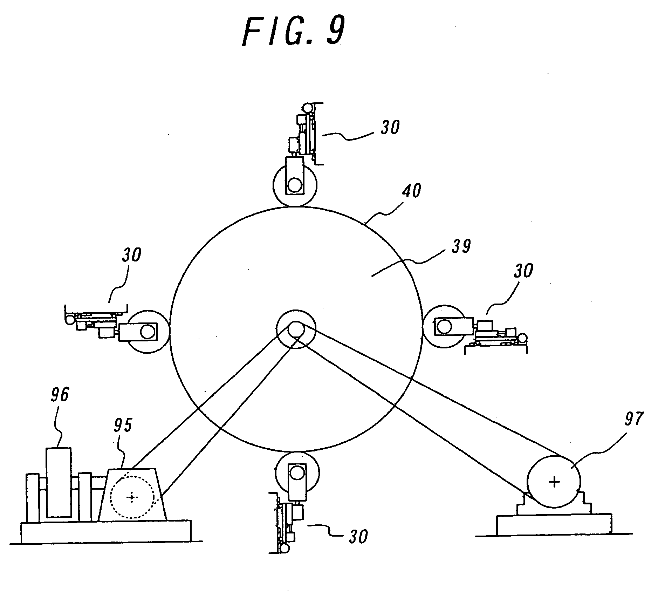

Further, when the behavior of the vehicle during the deceleration is particularly examined, as shown a schematic diagram of the configuration of the hardware of the simulation apparatus of the vehicle in FIG. 9, providing a rotational drum 39 which has a dummy road 40 commonly contacting with the four tires and constitutes a vehicle inertial part makes the hardware possible to simulate the inertia attributing to the vehicle, which enables an accurate simulation and is suitable.

In the example shown in FIG. 9, a part of the hardware 31 excluding the rotational drum 39 having the dummy road 40 and the drum rotating servo actuator 43 is referred to as wheel-part hardware 30, four set of the wheel-part hardware 30 are displaced on the periphery of the rotational drum 39 and the tire 12 of each set of the wheel-part hardware 30 is contacted to the dummy road 40. The rotational drum 39 is rotationally driven via a chain by a clutch-equipped drum rotating servo actuator 97 capable of connecting/disconnecting a transmission of the driving force. A flywheel 96 is connectedly provided on the rotation axis of the rotational drum 39 via a continuously variable transmission 95.

Upon simulating the behavior of the vehicle during the deceleration, for example, a rotation of the rotational drum 39 is operated at a given velocity, thereafter a clutch of the clutch-equipped drum rotating servo actuator 97 is disconnected to make the rotation of the rotational drum free, and then a command for increasing the hydraulic pressure is given from the software 51 to the master control valve of the brake device 80 to brake the rotation of the tire 32. At this point, changes in the rotation of the tire until the tire stops is measured to closely examine the brake performance.

In this operation, the reduction ratio of the continuously variable transmission 95 is adjusted to make the inertial moment of the flywheel 96 acting about the rotational drum 39 equal to the inertia of the vehicle, so that the inertia of the vehicle can be simulated by the hardware. In addition, the change gear ratio of the continuous variable transmission is adjusted to be able to simulate various vehicle bodies.

The inertia of the vehicle can be simulated by the software and, in FIG. 9, the rotating servo actuator 97 instead of a vehicle inertia simulate part consisting of the continuous variable transmission 95 and the flywheel 96 is controlled to vary the rotation of the rotational drum 39 to simulate the inertia of the vehicle, so that the hardware of the vehicle inertial simulate part can be omitted.

In order to simulate the inertia of the vehicle by the software, a force to be applied to the tire from the road can be calculated based on the change over time in the rotation of the respective tires and the measured value measured by the six-component sensors 70 corresponding to the respective tires, and the rotating servo actuator 97 is so controlled that the force applied from the road is obtained.

The above-mentioned method for simulating the inertia of the vehicle can be adopted to both of the case where the brake device 80 is operated to brake the vehicle and where the tire rotating servo actuator is operated to accelerate/decelerate the vehicle.

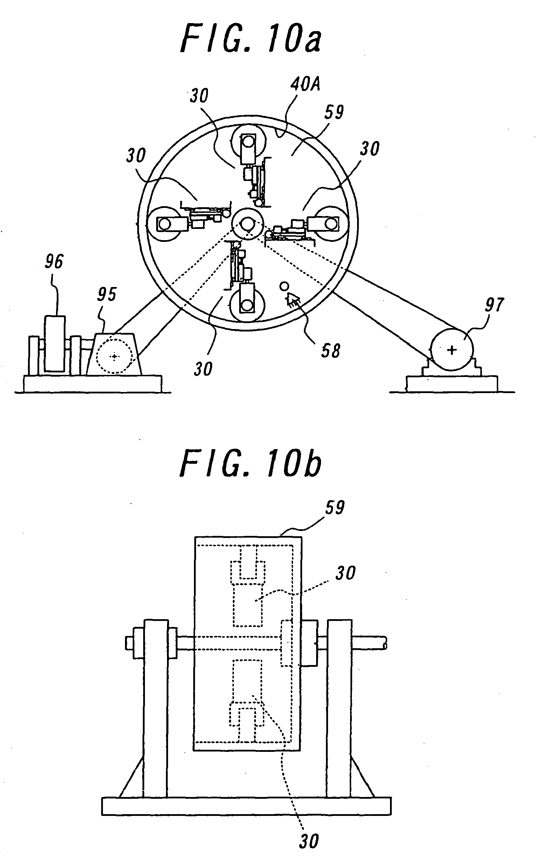

A hardware configuration of another example of the simulation apparatus is shown in FIGS. 10(a) and 10(b) as a plane view and a side view, respectively. In this example, a rotational ring 59 instead of the rotational drum 39 shown in FIG. 9 is used as a rotation body, a dummy road 40A is formed on the inner peripheral surface of the rotational ring, and four wheel part hardware 30 are provided to contact to the dummy road 40A. In this example, when a sprinkler system 58 sprays water on the dummy road 40A to adjust the friction coefficient of the dummy road 40A, the sprayed water can be held on the dummy road, so that a road covered with water thicker than that held on the dummy road formed on the outer peripheral surface of the rotational drum can also be simulated.

The present invention is not limited to the above-mentioned examples, and various changes and modifications may be made within the scope of the appended claims. For example, although a four-wheeled vehicle is addressed in the above-mentioned examples, a two-wheeled vehicle can also be addressed. In such a case, two tires, front and rear tires, may be provided on the hardware. Further, in such a case, there is no inner wheel difference and hence these two tires can be press-contacted to the dummy road on one rotational drum. Furthermore, the dummy road is consisted of the rotational drum in the above-mentioned examples, it may be an endless belt.

### Industrial Applicability

According to the present invention, information obtained by driving the driving part including, out of the entire vehicle, at least the tire which is assembled with the wheel and is inflated at a given internal pressure under the comparable condition to that in an actual driving is output from the hardware, so that modeling used in the case where the tire is processed by the software is, therefore, unnecessary. In addition, information output from such hardware is input to the software which models and processes at least the vehicle body, so that the driving characteristics of the vehicle provided with desired tires can be readily, quickly, accurately and inexpensively collected.

Further, in the present invention, at least a part of the driving information output by the software processing is fed back to the hardware to control the driving condition of the driving part of the vehicle depending on the behavior of the vehicle, so that more accurate information indicating the behavior characteristics of the entire vehicle can be real-timely derived.

## Claims

1. A hybrid simulation system of a vehicle for use in a tire testing machine for real-time evaluation of steering stability,
said simulation system including hardware (11, 31) wherein, for collecting information indicating the behaviour characteristics of a vehicle having at least two tires in its running state, said hardware (11, 31) comprises a driving part including a tire (12, 32) which is assembled with a wheel (13, 33) and is inflated at a given internal pressure, said driving part being adapted to be driven under the comparable condition to that in an actual driving, and a sensor (70) is provided for deriving information obtained by driving the driving part;
said simulation system being operated with software (21, 51) wherein information output from the sensor of the hardware is input as a parameter, said software including a program in which at least a vehicle body part of the vehicle is modelled and which is adapted to stimulate a running state of said vehicle, so that information indicating the behaviour characteristics of the entire vehicle is derived from the software while at least a part of the driving information output by a processing of the software is fed back to said hardware to control the driving condition of the driving part of the vehicle depending on the behaviour of the vehicle; wherein:
only the tire assembled with the wheel is included as the driving part of said hardware, and said software includes a program in which, in addition to the vehicle body of the vehicle, a suspension (61) supporting the tire is also modelled;
the hardware (11, 31) comprises a supporting device (35, 38, 45) rotatably holding the tire (12, 32) which is assembled with the wheel(13, 33) and is inflated at a given internal pressure, a dummy road (14, 40) to which the tire is press-contacted, a drive control device (16) having plural actuators (36, 37, 41, 42, 43) which drive the tire (12, 32) and the dummy road (14, 40) and control the press-contact state of the tire against the dummy road in this condition, and a detection device (17) having plural sensors (70) for detecting a force affecting said supporting device when the tire is rotationally driven under the comparable condition to that in an actual drive; and
the software including a program in which at least a vehicle body part of the vehicle is modelled, which is adapted to receive plural detection signal output from the detection device of said hardware, to simulate the running condition of the vehicle, and to output information indicating the behaviour characteristics of the entire vehicle while feeding back at least a part of the driving information output thereat to at least a part of the plural actuator of the drive controlling device of said hardware, **characterised in that** the hardware comprises actuators (36, 43) independently driving the tire and the dummy road, whereby an actuator (36) is adapted to drive the tire rotationally and an actuator (43) is adapted to drive the dummy road rotationally.

2. A hybrid simulation system as claimed in claim 1, **characterized by**:
an actuator (41) for controlling a vertical load press-contacting the tire against the dummy road, an actuator (37) for controlling a steering angle (α) defined as an angle between a direction perpendicular to the rotational axis of the tire and a direction (Y) in which the dummy road is running, and an actuator (42) for controlling a camber angle(β) defined as an angle between the rotational axis (34) of the tire and the dummy road (40) are provided as the actuators of the drive controlling device of the hardware; and
a sensor for detecting the peripheral velocity of the tire, a sensor for detecting the traveling velocity of the dummy road, and six sensors (70) for detecting forces in mutually orthogonal three axes x, y, and z including the rotational axis of the tire and rotation moments about these three axes are provided as the sensor of the detection device of said hardware.

3. A hybrid simulation system as claimed in claim 1 or 2, **characterized in that** the driving part of the hardware Including at least the tire is driven while controlling the ambient temperature, to derive information indicating temperature characteristics of the behaviour of the entire vehicle.

## Patentansprüche

1. Hybridsimulationssystem eines Fahrzeuges für eine Verwendung in einer Reifenprüfmaschine für die Echtzeitbewertung der Spurhaltigkeit,
wobei das Simulationssystem eine Hardware (11, 31) umfasst, wobei für das Sammeln einer Information, die die Verhaltenseigenschaften eines Fahrzeuges mit mindestens zwei Reifen in seinem Fahrzustand anzeigt, die Hardware (11, 31) ein Antriebsteil aufweist, das einen Reifen (12, 32) umfasst, der auf ein Rad (13, 33) montiert ist, und der mit einem vorgegebenen Innendruck aufgepumpt ist, wobei das Antriebsteil so ausgebildet ist, dass es unter dem mit einem tatsächlichen Fahren vergleichbaren Zustand angetrieben wird, und wobei ein Sensor (70) für das Ableiten einer Information vorhanden ist, die durch Antreiben des Antriebsteils erhalten wird;
wobei das Simulationssystem mit einer Software (21, 51) betrieben wird, bei der die Informationsausgabe vom Sensor der Hardware als ein Parameter eingegeben wird, wobei die Software ein Programm umfasst, bei dem mindestens ein Fahrzeugkarosserieteil des Fahrzeuges modelliert wird, und die ausgebildet ist, um einen Fahrzustand des Fahrzeuges zu simulieren, so dass die Information, die die Verhaltenseigenschaften des gesamten Fahrzeuges anzeigt, von der Software abgeleitet' wird, während mindestens ein Teil der Antriebsinformations, ausgegeben durch eine Verarbeitung der Software, zur Hardware zurückgeführt wird, um den Antriebszustand des Antriebsteils des Fahrzeuges in Abhängigkeit vom Verhalten des Fahrzeuges zu steuern; wobei:
nur der auf das Rad montierte Reifen als das Antriebsteil der Hardware eingeschlossen ist, und wobei die Software ein Programm umfasst, bei dem zusätzlich zur Karosserie des Fahrzeuges eine Aufhängung (61), die den Reifen trägt, ebenfalls modelliert wird;
wobei die Hardware (11, 31) aufweist: eine Haltevorrichtung (35, 38, 45), die drehbar den Reifen (12, 32) hält, der auf dem Rad (13, 33) montiert ist und der mit einem vorgegebenen Innendruck aufgepumpt ist; eine Blindstrecke (14, 40), mit der der Reifen presskontaktiert wird; eine Antriebssteuervorrichtung (16) mit mehreren Betätigungselementen (36, 37, 41, 42, 43), die den Reifen (12, 32) und die Blindstrecke (14, 40) antreiben und den Druckkontaktzustand des Reifens mit der Blindstrecke in diesem Zustand steuern; und eine Erfassungsvorrichtung (17) mit mehreren Sensoren (70) für das Erfassen einer Kraft, die die Haltevorrichtung beeinflusst, wenn der Reifen unter dem mit einem tatsächlichen Fahren vergleichbaren Zustand drehbar angetrieben wird; und
wobei die Software ein Programm umfasst, bei dem mindestens ein Fahrzeugkarosserieteil des Fahrzeuges modelliert wird, das ausgebildet ist, um mehrere Erfassungssignalausgaben von der Erfassungsvorrichtung der Hardware aufzunehmen, um den Fahrzustand des Fahrzeuges zu simulieren, und um eine Information auszugeben, die die Verhaltenseigenschaften des gesamten Fahrzeuges anzeigt, während mindestens ein Teil der Antriebsinformationsausgabe dabei zu mindestens einem Teil der mehreren Betätigungselemente der Antriebssteuervorrichtung der Hardware zurückgeführt wird; **dadurch gekennzeichnet, dass** die Hardware Betätigungselemente (36, 43) aufweist, die unabhängig den Reifen und die Blindstrecke antreiben, wobei ein Betätigungselement (36) ausgebildet ist, um den Reifen drehbar anzutreiben, und wobei ein Betätigungselement (43) ausgebildet ist, um die Blindstrecke drehbar anzutreiben.

2. Hybridsimulationssystem nach Anspruch 1, **dadurch gekennzeichnet, dass**:
ein Betätigungselement (41) für das Steuern einer vertikalen Belastung, die den Reifen mit der Blindstrecke presskontaktiert; ein Betätigungselement (37) für das Steuern eines Lenkwinkels (α), der als ein Winkel zwischen einer Richtung senkrecht zur Rotationsachse des Reifens und einer Richtung (Y) definiert wird, in der sich die Blindstrecke bewegt; und ein Betätigungselement (42) für das Steuern eines Radsturzwinkels (β), der als ein Winkel zwischen der Rotationsachse (34) des Reifens und der Blindstrecke (40) definiert wird, als die Betätigungselemente der Antriebssteuervorrichtung der Hardware bereitgestellt werden; und
ein Sensor für das Erfassen der Umfangsgeschwindigkeit des Reifens; ein Sensor für das Erfassen der Bewegungsgeschwindigkeit der Blindstrecke; und sechs Sensoren (70) für das Erfassen der Kräfte in gegenseitig orthogonalen drei Achsen x, y, z, die die Rotationsachse des Reifens umfassen, und der Rotationsmomente um diese drei Achsen, als die Sensoren der Erfassungsvorrichtung der Hardware bereitgestellt werden.

3. Hybridsimulationssystem nach Anspruch 1 oder 2, **dadurch gekennzeichnet, dass**
das Antriebsteil der Hardware, das mindestens den Reifen umfasst, angetrieben wird, während die Umgebungstemperatur gesteuert wird, um eine Information abzuleiten, die die Temperatureigenschaften des Verhaltens des gesamten Fahrzeuges anzeigt.

## Revendications

1. Système de simulation hybride d'un véhicule, destiné à être utilisé dans une machine de contrôle de bandages pneumatiques en vue d'une évaluation en temps réel de la stabilité de direction ;
ledit système de simulation englobant du matériel (11, 31), dans lequel, en vue de collecter des informations indiquant les caractéristiques de comportement d'un véhicule comportant au moins deux bandages pneumatiques dans son état de roulement, ledit matériel (11, 31) comprend une partie d'entraînement englobant un bandage pneumatique (12, 32) assemblé sur une roue (13, 33) et gonflé à une pression interne définie, ladite partie d'entraînement étant adaptée pour être entraînée dans un état comparable à celui d'un roulement effectif, un capteur (70) servant à dériver les informations obtenues par l'entraînement de la partie d'entraînement étant également fourni;
ledit système de simulation étant actionné par un logiciel (21, 51), dans lequel les informations transmises par le capteur du matériel sont entrées comme paramètre, ledit logiciel englobant un programme dans lequel au moins une partie de la carrosserie du véhicule est modelée et étant adapté pour simuler un état de roulement dudit véhicule, de sorte que les informations indiquant les caractéristiques du comportement de l'ensemble' du véhicule sont dérivées du logiciel, au moins une partie des informations d'entraînement émises par un traitement du logiciel étant ramenée vers ledit logiciel pour contrôler l'état d'entraînement de la partie d'entraînement du véhicule en fonction du comportement du véhicule ; dans lequel
seul le bandage pneumatique assemblé sur la roue est inclus comme partie d'entraînement dudit matériel, ledit logiciel englobant un programme, dans lequel, en plus de la carrosserie du véhicule, une suspension (61) supportant le bandage pneumatique est également modelée;
le matériel (11, 31) comprend un dispositif de support (35, 38, 45), retenant de manière rotative le bandage pneumatique (12, 32), assemblé sur la roue (13, 33) et gonflé à une pression interne définie, une fausse voie (14, 40) avec laquelle le bandage pneumatique est mis en contact par pression, un dispositif de commande de l'entraînement (16), comportant plusieurs actionneurs (36, 37, 41, 42, 43) entraînant le bandage pneumatique (12, 32) et la fausse voie (14, 40), et contrôlant l'état de contact par pression du bandage pneumatique contre la fausse voie dans cet état, et un dispositif de détection (17), comportant plusieurs capteurs (70) pour détecter une force affectant ledit dispositif de support lors de l'entraînement rotatif du bandage pneumatique dans un état comparable à celui d'un entraînement effectif ; et
le logiciel englobant un programme dans lequel au moins une partie de la carrosserie du véhicule est modelée, adapté pour recevoir plusieurs signaux de détection transmis par le dispositif de détection dudit matériel, pour simuler l'état de roulement du véhicule et pour transmettre des informations indiquant les caractéristiques du comportement de l'ensemble du véhicule, au moins une partie des informations d'entraînement transmises étant ramenée vers au moins une partie des plusieurs actionneurs du dispositif de commande de l'entraînement dudit logiciel, **caractérisé en ce que** le matériel comprend des actionneurs (36, 43), entraînant de manière indépendante le bandage pneumatique et la fausse voie, un actionneur (36) étant adapté pour entraîner le bandage pneumatique de manière rotative et un actionneur (43) étant adapté pour entraîner la fausse voie de manière rotative.

2. Système de simulation hybride selon la revendication 1, **caractérisé en ce que**:
un actionneur (41) pour contrôler une charge verticale mettant le bandage pneumatique en contact par pression avec la fausse voie, un actionneur (37) pour contrôler un angle de direction (α), défini comme angle entre une direction perpendiculaire à l'axe de rotation du bandage pneumatique, et une direction (Y) dans laquelle la fausse voie se déplace, et un actionneur (42) pour contrôler un angle de carrossage (β) défini comme angle entre l'axe de rotation (34) du bandage pneumatique et la fausse voie (40), servent d'actionneurs du dispositif de commande de l'entraînement du matériel ; et
un capteur, pour détecter la vitesse périphérique du bandage pneumatique, un capteur pour détecter la vitesse de déplacement de la fausse voie, et six capteurs (70) pour détecter des forces dans trois axes mutuellement orthogonaux x, y et z, englobant l'axe de rotation du bandage pneumatique et les moments de rotation sur ces trois axes, servent de capteurs du dispositif de détection dudit matériel.

3. Système de simulation hybride selon les revendications 1 ou 2, **caractérisé en ce que** la partie d'entraînement du logiciel englobant au moins le bandage pneumatique est entraînée tout en contrôlant la température ambiante, pour dériver des informations indiquant les caractéristiques de température du comportement de l'ensemble du véhicule.
